# EUROPEAN PATENT APPLICATION

(11) **EP 3 252 955 A1**
(43) Date of publication of application: **06.12.2017**
(21) Application number: 16290098.9
(22) Date of filing: 01.06.2016
(51) Int. Cl.: H04B 1/00, H04B 1/10, H04B 1/18

(54) **RECEIVER DEVICE AND METHOD OF OPERATING A RECEIVER DEVICE**

(71) Applicant: ALCATEL LUCENT, 92100 Boulogne-Billancourt (FR)
(72) Inventor: Baracca, Paolo, 70435 Stuttgart (DE); Wild, Thorsten, 70435 Stuttgart (DE); Ahmed, Rana, 70435 Stuttgart (DE); Schaich, Frank, 70435 Stuttgart (DE); Mayer, Hans-Peter, 70435 Stuttgart (DE)
(74) Representative: DREISS Patentanwälte PartG mbB

(57) **Abstract**

The invention relates to a receiver device (100), particularly for a cellular communications network, wherein said receiver device (100) is configured to receive (300) a radio frequency, RF, signal (rfs) from a further device (200) on at least one frequency sub-band (sb) of a system frequency band (sfb) associated with a system bandwidth (BW), wherein said receiver device (100) comprises an analog filter device (110; 110') for filtering (310) said RF signal (rfs) and/or a signal (s1) derived from said RF signal (rfs) to obtain a filtered signal (s2), wherein said filter device (110; 110') is configured to filter said RF signal (rfs) and/or said signal (s1) derived from said RF signal (rfs) with a predetermined passband frequency range (fcl) which is smaller than said system bandwidth (BW).

## Description

### Field of the invention

The present invention relates to a receiver device, particularly for a cellular communications network, wherein said receiver device is configured to receive a radio frequency (RF) signal from a further device on at least one frequency sub-band of a system frequency band associated with a system bandwidth.

The invention further relates to a method of operating such receiver device.

### Background

Interference management, due to the concurrent transmission in the same frequency band of different transmitter devices of e.g. different base stations of a cellular communications network in a downlink direction and of different user equipments in an uplink direction has been one of the most relevant issues since standardization of long term evolution (LTE) systems.

Already in LTE-Advanced (LTE-A) but also particularly in future mobile networks (fifth generation, 5G, and beyond) new transmission schemes and modes, like for example device-to-device (D2D) communications or dynamic time division duplex (TDD), will be enforced to provide higher data rates and improved coverage. To avoid interference, the transmissions in these modes are often scheduled within different sub-bands of a system frequency band of the respective system. However, a particular and specific drawback happens specifically with this kind of transmission modes. Considering conventional receiver architectures, which comprise a low-pass filter stage having a passband range corresponding to the complete system band, interfering signals of several sub-bands within said system band may be present which e.g. drive an automatic gain control (AGC) of an analog to digital (ADC) converter stage, thus leading to a high amount of quantization noise with respect to a useful signal, which may be associated with another sub-band within said system band. Disadvantageously, a dynamic range of the conventional receiver architecture may be exceeded, so that a successful reception of e.g. a low-power signal of interest in a specific sub-band, e.g. from a D2D link nearby, is not possible anymore, e.g. because a nearby interferer communicating with a far away macro cell device (e.g., base station of said macro cell) introduces interference into the system. This effect is also known as "blocking" of the receiver within said conventional receiver architectures.

### Summary

In view of this, it is an object of the present invention to provide an improved receiver device and an improved method of operating such receiver device which avoid the aforementioned disadvantages of prior art.

Regarding the above-mentioned receiver device, according to a first aspect, said object is achieved by said receiver device comprising an analog filter device for filtering said RF signal and/or a signal derived from said RF signal to obtain a filtered signal, wherein said filter device is configured to filter said RF signal and/or said signal derived from said RF signal with a predetermined passband frequency range which is smaller than said system bandwidth. This advantageously enables to specifically select already in the analog domain a spectral portion of the RF signal and/or the signal derived from said RF signal which comprises the useful signal intended to be received and further processed (i.e., decoded and the like). Hence, other portions of signal energy comprised within the system bandwidth than said useful signal, which in conventional receiver architectures would also be "processed" in the sense of influencing e.g. an AGC stage and the like, may successfully be excluded from a signal processing chain according to the principle of the embodiments. This is particularly beneficial if the useful signal only comprises a rather small portion of the overall system bandwidth (e.g., one single sub-band), as a corresponding amount of potentially interfering power (e.g., from the remaining sub-bands within said system bandwidth) can be prevented from entering the processing stage when processing the useful signal.

According to an embodiment, the filter device may directly filter the received RF signal, e.g. the RF signal as it may be obtained by an antenna system at the receiver or a device supplying the receiver with said RF signal from an (external) antenna system.

According to a further embodiment, it is also possible that the filter device is configured to filter a signal derived from said RF signal. Such signal derived from said RF signal in the aforementioned sense may e.g. be an instance of a received RF signal which has been processed or preprocessed in a specific way, i.e. by down-converting the RF signal to a baseband frequency range or down-converting the RF signal to an intermediate frequency (IF) range. In other words, according to some embodiments, the filter device is configured for filtering a down-converted signal that has been obtained from said RF signal by a per se known process of down-converting e.g. by means of a mixer device.

Regardless whether the filter device is configured to filter directly said RF signal or said signal derived from said RF signal such as e.g. a down-converted signal (e.g., down-converted to a baseband frequency range or to an IF range), the filter device is configured to filter such signal with a predetermined passband frequency range which is smaller than said system bandwidth thus ensuring to prevent potential interfering signals which are not required for further processing of the useful signal comprised within said received RF signal.

According to some embodiments, the predetermined passband frequency range may correspond to about 50 % (percent) of the system bandwidth or less, preferably to about 10 % of the system bandwidth or less.

According to a further embodiment, said predetermined passband frequency range corresponds with said at least one frequency sub-band. This advantageously enables to "pick" or select only the portion of signal energy of the received RF signal or the down-converted signal derived from said RF signal which is located in the interesting sub-band thus excluding potentially interfering signal power comprised within other sub-bands within said system bandwidth. In conventional systems, signal power present in these other sub-bands would not be excluded from further processing, whereby significant interference would be introduced to the processing chain, e.g. wrongly driving an AGC unit, increasing quantization noise in an ADC process, and the like.

According to a further embodiment, said predetermined passband frequency range may also correspond with a plurality of adjacent frequency sub-bands. In other words, according to some embodiments, the filtering bandwidth of the filter device according to the inventive principle is substantially equal to a bandwidth of a single sub-band or substantially equal to a multiple of a bandwidth of such single sub-band, e.g. two or three (or more) sub-bands.

According to a further embodiment, it is also possible to provide said filter device with a specific filter mask that comprises at least two different passband frequency ranges which may also cover non-adjacent sub-bands, whereby an even more sophisticated specific selection of a useful signal, which may be comprised within different non-adjacent sub-bands of the system bandwidth, may be enabled.

According to a further embodiment, said filter device comprises at least two filtering units that comprise filter characteristics with adjacent passband frequency ranges. For example, according to a particularly efficient embodiment, the overall system bandwidth may be partitioned into two adjacent passband frequency ranges, wherein each one of said filtering units covers one single of said two adjacent passband frequency ranges. Evidently, according to further embodiments, more than two filtering units may also be provided, wherein each filtering unit comprises a filter characteristic corresponding to at least one sub-band (or to a plurality of, preferably adjacent, sub-bands).

According to a further embodiment, said filter device comprises a plurality of filtering units, wherein each filtering unit has a filter characteristic with a respective passband frequency range such that any frequency sub-band of said system bandwidth is covered by the passband frequency range of at least one of said filtering units. This advantageously ensures that within the whole system bandwidth, a more frequency selective filtering in the sense of the principle of the present embodiments may be provided thus attaining the inventive advantages in the whole system bandwidth. However, according to further embodiments, it may also be possible that only some part of said overall system bandwidth is covered with filtering units the respective passband frequency ranges of which are provided in the sense of the principle of the embodiments.

According to a further particularly preferred embodiment, any frequency sub-band of said system bandwidth is covered by the passband frequency range of exactly one of said filtering units, whereby a particularly efficient solution is provided which ensures that a minimum number of different filtering units is required while at the same time covering the complete system bandwidth with the filtering principle according to the embodiments.

According to a further embodiment, a first filtering unit comprises a bandpass filter characteristic or a low-pass filter characteristic with the first passband frequency range, wherein a second filtering unit comprises a bandpass filter characteristic with a second passband frequency range, which is, preferably, adjacent to said first passband frequency range. In the context of the present invention, regarding a frequency dimension, "adjacent" denotes that along said frequency dimension there is no substantial gap within the corresponding passband frequency ranges, e.g. such that adjacent sub-bands may be separated from each other by adjacent passband frequency ranges of the corresponding filtering units, wherein said gap may be zero or comprise values of up to some hundred Hertz.

According to an embodiment, a first filtering unit may comprise a low-pass filter characteristic with the first passband frequency range, and the second filtering unit may comprise a bandpass filter characteristic with a second passband frequency range being adjacent to the first passband frequency range of the low-pass filter. This is particularly beneficial if the signal to be filtered is a baseband signal derived from a RF signal by down-converting the RF signal to a baseband frequency range. In this scenario, the first filtering unit covers with its low-pass filter characteristic spectral portions between 0 Hz (Hertz) and the cutoff frequency of the low-pass filter characteristic, and the second filtering unit covers higher frequency signal portions.

According to a further embodiment, of course more than one second filtering unit comprising bandpass filter characteristics may be provided.

According to yet another embodiment, a first filtering unit comprises a bandpass filter characteristic with a first passband frequency range, and the second filtering unit comprises a bandpass filter characteristic with a second passband frequency range, which is, preferably, adjacent to said first passband-frequency range.

According to a further embodiment, said filter device comprises at least one filtering unit that comprises filter characteristics with a passband frequency range that is substantially identical to said system bandwidth and thus advantageously enables a filtering of the RF signal or a signal derived from said RF signal with the maximum possible bandwidth, i.e. a system bandwidth, e.g. in a case where a useful signal is spread over a comparatively large plurality of sub-bands or even over all sub-bands of the system bandwidth. However, if a useful signal comprises only one or few sub-bands, the aforementioned techniques may be applied to selectively filter only the useful signal according to further embodiments.

According to yet another embodiment, said receiver device is configured to select said predetermined passband frequency range depending on frequency resources associated with an expected transmission from said further (e.g., an external) device to said receiver device. This advantageously exploits knowledge on which sub-band within a system band a future intended transmission from an external device to the receiver device is scheduled, which is particularly beneficial as this knowledge is present in most receiver devices, especially in receiver devices for cellular communications networks.

According to a further embodiment, the receiver device may selectively select the predetermined passband frequency range depending on said knowledge of said frequency resources associated with an expected transmission from an external device (said further device) and/or from a plurality of external devices to said receiver device. E.g., from time to time, also dynamically (during operation of the receiver device), the receiver device according to an embodiment may choose different passband frequency ranges, e.g. by selecting appropriate filtering units as explained above.

According to a further preferred embodiment, said step of selecting said predetermined passband frequency range is performed by selecting at least one corresponding filtering unit associated with said predetermined passband frequency range for filtering said RF signal and/or said signal derived from said RF signal. Said step of selecting may, according to a further embodiment, e.g. be performed by providing a selector switch which connects the RF signal and/or said signal derived therefrom to a corresponding filtering unit with the appropriate filtering characteristics, i.e. passband frequency range.

According to a further preferred embodiment, said filter device comprises at least two filtering units with different bandpass filter characteristics, wherein said step of selecting said predetermined passband frequency range is performed by selecting at least one of said at least two filtering units which is associated with said predetermined passband frequency range for filtering said RF signal and/or said signal derived from said RF signal.

According to a further embodiment, an output of different filtering units may be connected to a combiner or adder, which combines or adds the respective output signal(s) of the filtering units, for forwarding any output signal(s) obtained from said filtering unit(s) to a subsequent processing stage such as e.g. an analog to digital converter (ADC).

According to a further embodiment, said filter device comprises at least one tunable filtering unit (preferably with bandpass filter characteristic), wherein a passband frequency range and/or a passband center frequency of said tunable filtering unit is tunable, which enables to precisely select an interesting part or spectral portion, respectively, of the received signal.

According to yet another embodiment, said receiver device is configured to tune said passband frequency range and/or said passband center frequency of said tunable filtering unit, particularly depending on frequency resources associated with an expected transmission from said further (or generally an external) device to said receiver device.

According to a further embodiment, it is also possible to provide said tunable filtering unit such that it comprises a low-pass filter characteristic with a tunable cut-off frequency, instead of a bandpass filter characteristic.

According to a preferred embodiment, said tunability (i.e., capability to be tuned) is also enabled dynamically, i.e. during an operation of the receiver device and its filter device.

According to a further embodiment, it is also possible to combine one or more filtering units as explained above with at least one tunable filtering unit as explained in the aforementioned embodiment, whereby an operational flexibility and selectivity is even further improved.

A further solution to the object of the present invention is provided by a device for a cellular communications network, particularly a terminal for a cellular communications network, which comprises at least one receiver device according to the embodiments.

Yet another solution to the object of the present invention is provided by a base station for a cellular communications network which comprises at least one receiver device according to the embodiments.

In other words, the receiver device according to the principle of the embodiments may advantageously be employed both in a network side device (e.g., base station) of a cellular communications network as well as in a terminal side device of a cellular communications network. However, the principle of the embodiments is not limited to such devices and applications within cellular networks, but may rather also be applied to peer-to-peer communication architectures such as D2D communications and the like.

A further solution to the object of the present invention is provided by a method of operating a receiver device according to claim 13. Further advantageous embodiments are provided by the dependent claims.

### Brief description of the figures

Further features, aspects and advantages of the present invention are given in the following detailed description with reference to the drawings in which:
- Figure 1: schematically depicts a block diagram of a signal processing chain according to an embodiment,
- Figure 2a: schematically depicts a block diagram of a filter device according to an embodiment,
- Figure 2b: schematically depicts a block diagram of a filter device according to a further embodiment,
- Figure 3: schematically depicts a simplified flow-chart of a method according to an embodiment,
- Figure 4a-4e: schematically depict different spectral ranges of a system bandwidth and a passband frequency range according to further embodiments,
- Figure 5: schematically depicts an operational scenario according to an embodiment,
- Figure 6: schematically depicts a signal received power over frequency related to the scenario of figure 5, and
- Figure 7: schematically depicts a further operational scenario according to an embodiment.

### Description of the embodiments

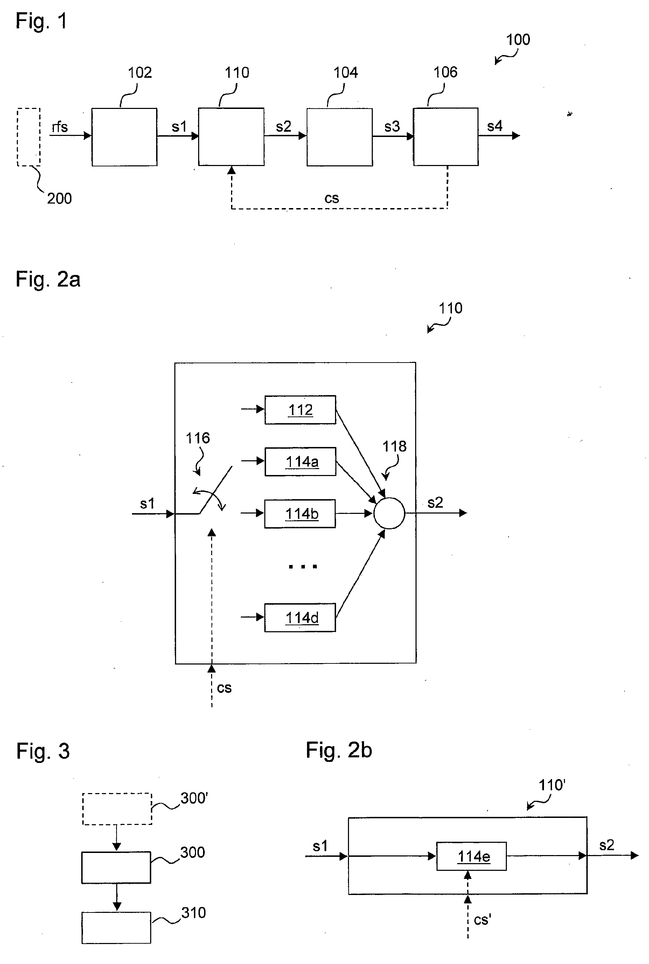

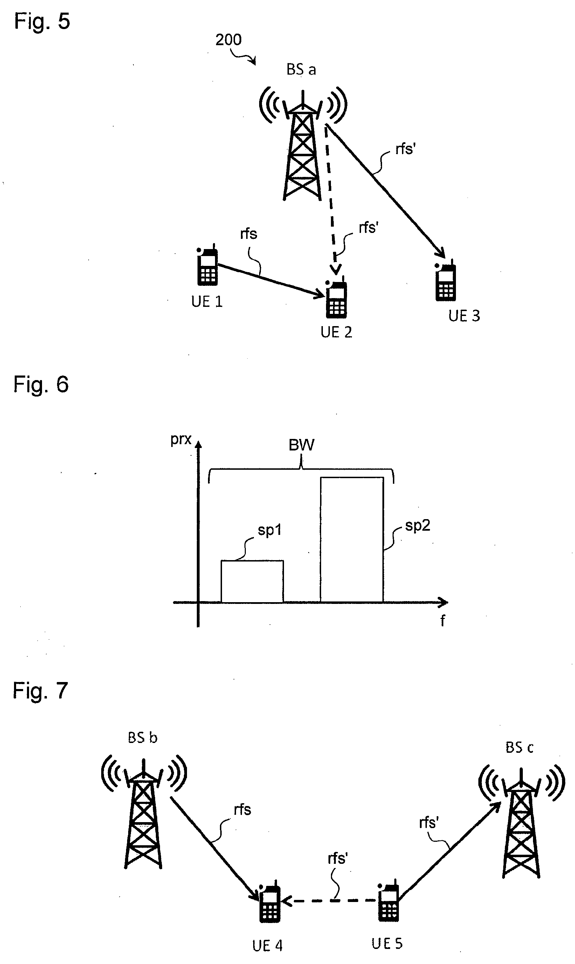

Figure 1 schematically depicts a signal processing chain of a receiver device 100 according to an embodiment. The receiver device 100 may e.g. be comprised in a terminal device (UE2, cf. Fig. 5) or base station (BS a, also cf. Fig. 5) of a cellular communications network or in any other device capable of receiving and/or processing radio frequency, RF, signals received from a further device 200. For the further exemplary description, without loss of generality, it is assumed that the receiver device 100 of Fig. 1 forms a part of a terminal UE2 of a cellular communications network, whereas said further device 200 may e.g. be represented by a base station BS a (Fig. 5) of said cellular communications network.

The receiver device 100 comprises a mixer 102 which receives at its input an RF signal rfs, e.g. from an antenna system not depicted in figure 1. The RF signal rfs has been transmitted from a further device 200 to the receiver device 100 (or its antenna system, respectively).

According to an embodiment, the mixer 102 is configured to perform a down-conversion of the RF signal rfs, for example to a baseband frequency range. According to a further embodiment, the down-conversion may also be performed from the RF range to an intermediate frequency (IF) range. As a result, the mixer 102 provides at its output a down-converted signal s1, which has been derived from the radio frequency signal rfs in the afore-explained manner.

The receiver device 100 further comprises an analog filter device 110, for filtering said signal s1. Presently, it is considered that the filter device 110 is configured to filter the down-converted, i.e. baseband or IF signal s1. However, according to further embodiments, it is also possible to omit the mixer 102 and to directly feed the radio frequency signal rfs to the filter device 110 as an input signal s1.

The filter device 110 is configured to filter said signal s1 in the analog domain with a predetermined passband frequency range, which is smaller than a system bandwidth of the receiver device 100. As a result, at an output of the filter device 110, the filtered signal s2 is obtained, which comprises signal power only in an interesting spectral range associated with said predetermined passband frequency range.

The filtered signal s2 is e.g. forwarded to an analog to digital converter, ADC, 104, which provides at its output a digital signal s3 representing the analog filtered signal s2 in the digital domain. As the filtering according to the principle of the embodiments has already been performed in the analog domain, namely by the analog filter device 110, an ADC processing on signal s2 may be performed with reduced interference as compared to conventional systems, thus particularly preventing or at least significantly reducing a wrong driving of an AGC stage of the ADC 104 by interfering signal components.

The radio device 100 further comprises a digital processing unit 106 which is provided for performing further steps of digital signal processing in a per se known manner, and which may e.g. comprise a digital signal processor or the like. Also, the digital processing unit 106 may provide a control signal cs, which controls an operation of the filter device 110. Particularly, by means of the control signal cs, the predetermined passband frequency range for step of filtering by means of the filter device 110 may be controlled. At an output of the digital processing unit 106, an output signal s4 is obtained.

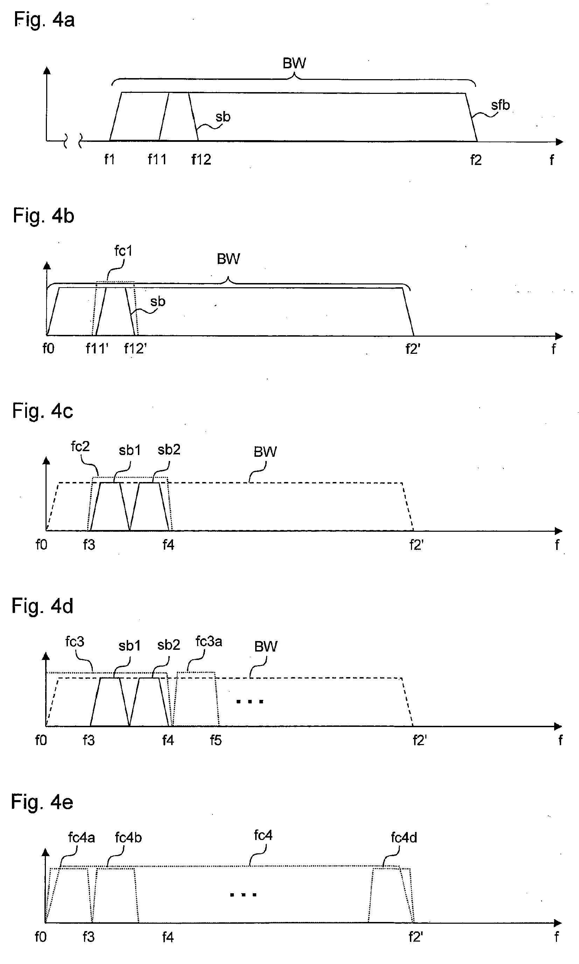

Figure 4a schematically depicts a spectral diagram wherein an overall system bandwidth BW of the receiver device 100 of figure 1 is symbolized with a bracket, the system bandwidth BW extending from a first frequency f1 to a second frequency f2. For example, the system bandwidth BW may e.g. comprise 10 MHz (Megahertz) or 20 MHz or the like. However, according to further embodiments, other values for the system bandwidth BW are also possible.

Also depicted in figure 4a is a specific frequency sub-band sb on which the receiver device 100 may receive signals coming from said external device 200 (Fig. 1, 5). The sub-band sb is smaller than the overall system bandwidth BW and is arranged between a first sub-band frequency f11 and a second sub-band frequency f12. The depicted subband sb, together with further subbands, that are not depicted by Fig. 4a, form a system frequency band sfb which represents the frequency range or bandwidth BW the receiver device 100 is capable of handling, i.e. processing.

According to the principle of the embodiments, while receiving a signal from the external device 200, the receiver device 100 may advantageously filter the signal s1 (figure 1) in the analog domain with a predetermined passband frequency range which is smaller than said system bandwidth BW. This advantageously enables to precisely select the interesting frequency range within the overall system bandwidth BW the received signal is positioned in. For example, according to an embodiment, a predetermined passband frequency range for filtering a signal s1 may be chosen such that it basically comprises the specific sub-band sb as depicted by figure 4a. This advantageously ensures that a received signal power within a system bandwidth BW, which is, however, not included in the interesting sub-band sb (e.g., coming from adjacent or further subbands of the system frequency band sfb), does not contribute to interference imparted on a signal s1.

According to a particularly preferred embodiment, the receiver device 100 is configured to select the predetermined passband frequency range depending on frequency resources associated with an expected transmission from the external device 200 to the receiver device 100. For example, if the receiver device 100 forms part of a receiver of a terminal of a cellular communications network, as already exemplarily mentioned above, the frequency resources associated with an expected transmission from the external device 200 are usually known by the terminal and the receiver device 100. According to the principle of the embodiments, this knowledge may advantageously be exploited to precisely adapt the filter characteristics or the predetermined passband frequency range, respectively, for the process of filtering said signal s1 by the filter device 110.

Figure 4b depicts a further spectral diagram, where it is assumed that the signal s1 (Fig. 1) is a baseband signal (i.e., has been down-converted from the RF range to a baseband frequency range), and the system bandwidth BW ranges from a first frequency f0 = 0Hz to a second frequency f2', which e.g. amounts to 10 MHz. Also depicted is an interesting sub-band sb between the frequencies f11', f12'. According to an embodiment, the receiver device 100 is configured to select said predetermined passband frequency range such that it covers the interesting sub-band sb, which is indicated by a first filter characteristic fc1 being symbolized by a dotted line in figure 4b. In other words, the predetermined passband frequency range is represented by the first filter characteristic fc1, which advantageously ensures that only spectral components of the interesting subband sb will form part of the filtered signal s2 (Fig. 1) thus avoiding the disadvantages of prior art, and especially reducing or even eliminating interference originating from spectral ranges outside the interesting subband but inside the system bandwidth BW. Hence, e.g. an AGC (automatic gain control, not depicted) of the processing chain of Fig. 1 is driven mainly by the interesting signal of the subband sb, and quantization noise of the ADC is reduced.

Figure 4c depicts a further scenario, wherein the predetermined passband frequency range for filtering is selected such that two adjacent sub-bands sb1, sb2 are arranged within said passband frequency range, which presently is enabled by providing a suitable filter characteristic fc2 of the filter device 110. In this case, the predetermined passband frequency range (presently between frequencies f3, f4) according to the principle of the embodiments is represented by the filter characteristic fc2.

Figure 4d depicts a further operational scenario, wherein a first filter characteristic fc3 is provided in form of a low-pass filter characteristic, and wherein a second filter characteristic fc3a is provided in form of a first passband filter characteristic, the first passband filter characteristic fc3a being adjacent to the low-pass filter characteristic fc3. This configuration for example enables to adapt the predetermined passband frequency range starting from frequency f0 to frequency f4 e.g. covering the sub-bands sb1, sb2. If a further sub-band, which is not depicted by figure 4d, should be covered for the filtering process, the further filter characteristic fc3a may be selected, i.e. instead of the filter characteristic fc3. Also, according to a further embodiment, both filter characteristics fc3, fc3a may be selected simultaneously to form an aggregated predetermined passband frequency range between frequencies f0, f5.

Figure 4e depicts a further scenario, wherein a filter characteristic fc4 is provided that comprises a passband frequency range which substantially corresponds to an overall system bandwidth BW (figure 4a).

Figure 2a schematically depicts an analog filter device 110 according to a preferred embodiment. At an input, the filter device 110 receives the signal s1, which may e.g. be a down-converted signal as obtained by the mixer 102 explained above with reference to figure 1. The down-converted signal s1 may e.g. comprise a base band frequency range or an intermediate frequency range.

The filter device 110 of figure 2a comprises a plurality of (analog) filtering units 114a, 114b, ..., 114d, wherein presently each filtering unit 114a, 114b, ..., 114d has a filter characteristic with a respective passband frequency range such that any frequency sub-band sb of the system bandwidth BW is covered by the passband frequency range of at least one of said filtering units 114a, 114b, ..., 114d, wherein preferably any frequency sub-band sb of said system bandwidth BW is covered by the passband frequency range of exactly one of the said filtering units 114a, 114b, ..., 114d.

For example, the first filtering unit 114a of figure 2a may comprise a filter characteristic as depicted by reference sign fc4a of figure 4e, the second filtering unit 114b may comprise a second filter characteristic fc4b, and the filtering unit 114d may comprise a filter characteristic fc4d as depicted by figure 4e. Depending on the overall system bandwidth BW to be covered by the filtering units 114a, 114b, ..., 114d, one or more further filtering units, which are not depicted in figure 4e for the sake of clarity, may be provided. This is indicated in figure 4e in the frequency range (f4, f2') by the three dots.

According to a further embodiment, in addition to the individual filtering units 114a, 114b, 114d, which are provided for filtering specific sub-bands, the filter device 110 may optionally also comprise at least one (analog) filtering unit 112 that comprises a filter characteristic with a passband frequency range which is substantially identical to the overall system bandwidth BW, cf. Fig. 4d.

Thus, the analog filter device 110 may selectively provide different predetermined passband frequency ranges comprising single or multiple sub-bands within said system bandwidth BW, or even the complete system bandwidth BW (e.g., in cases where a signal to be received is spread over the complete system bandwidth BW, in contrast to "narrowband" transmissions only using one or few sub-bands).

As can be seen from figure 2a, the filter device 110 further comprises a combiner 118, which may be an adder, which adds output signals of the individual filtering units 112, 114a, 114b, ..., 114d and outputs an aggregated signal s2 which may e.g. be forwarded to the ADC 104 as explained above with reference to figure 1.

The control signal cs, which may e.g. be generated by the digital processing unit 106 (Fig. 1), may control an operation of the selector switch 116 (Fig. 2a) which controls to which filtering unit(s) 112, 114a, 114b, ..., 114d the input signal s1, which is to be filtered by the filter device 110, is forwarded. In a preferred embodiment, the selector switch 116 can also select multiple filtering units, thus providing a resulting filter characteristic for the filter device 110 which corresponds to an aggregation of the respective filter characteristics of the individual, selected filtering units. For example, the selector switch may forward said input signal s1 to both filtering units 114a, 114d thus effecting a resulting filter characteristic for the filter device 110 (i.e., a predetermined passband range), that includes the lowest sub-band (along the frequency dimension f of Fig. 4e) and the highest sub-band of the complete bandwidth BW.

Advantageously, the state of the selector switch 116 and thus the predetermined passband range of the filter device 110 may be dynamically changed, i.e. altered during an operation of the receiver device 100, preferably depending on the control signal cs, for the creation of which knowledge at the receiver device side on frequency resources planned for future transmissions to said receiver device 100 may be exploited.

Figure 2b schematically depicts an analog filter device 110' according to a further embodiment. The filter device 110' comprises a tunable (analog) filtering unit 114e, wherein a passband frequency range and/or a passband center frequency of said tunable filtering unit 114e is tunable (e.g., may be changed) or configurable, e.g. by means of respective control signals cs', that may be provided by the digital processing unit 106.

According to a further embodiment, the receiver device 100 is configured to tune said passband frequency range and/or passband center frequency of said tunable filtering unit 114e, particularly depending on frequency resources as associated with an expected transmission from an external device 200 (Fig. 1) to said receiver device 100.

According to a further embodiment, it is also possible to provide an analog filter device 110 which comprises one or more filtering units of a type of the devices 114a, 114b, ..., 114d as explained above with reference to figure 2a, and with at least one filtering unit of the tunable type as explained above with reference to figure 2b.

Figure 3 schematically depicts a simplified flow-chart of a method according to an embodiment. In step 300, the RF signal rfs (Fig. 1) is received, and in step 310, the analog filter device 110 (Fig. 2a), 110' (Fig. 2b) filters said RF signal rfs and/or a signal s1 (Fig. 1) derived from said RF signal rfs. The optional selection of the predetermined passband frequency range is symbolized by the dashed block 300', and may e.g. be performed prior to said receiving step 300.

Optionally, according to further embodiments and if applicable, said selection 300' may also be performed during said receiving step 300 or at any other time.

Figure 5 schematically depicts an operational scenario according to an embodiment in the context of a cellular communications network. A terminal UE2 of the cellular communications network comprises a receiver device 100 (Fig. 1) according to the embodiments. The terminal UE2 receives a radio frequency signal rfs from a further terminal UE1 of the cellular communications network, wherein said signal rfs is associated with a device-to-device (D2D) communication from the terminal UE1 to the terminal UE2. The terminal UE2 further at least partially receives other RF signals rfs' provided by the base station 200 and being intended to be received by a further terminal UE3. However, as the signal transmission rfs' of the base station 200 to the further terminal UE3 is also allocated within the overall system bandwidth BW (figure 4a, 6), it represents an interference signal interfering with the useful D2D signal rfs from terminal UE1 as seen from the perspective of the terminal UE2.

Figure 6 schematically depicts a signal received power prx over frequency f related to the scenario of figure 5, wherein the first spectral component sp1 corresponds with the useful (D2D) signal rfs, and wherein the second spectral component sp2 corresponds with the interfering signal rfs', as far as the D2D signal reception is concerned.

Accordingly, following the principle of the embodiments, the receiver device 100 of the terminal UE2 or its filter device 110 (figure2a) filters the RF signal rfs with a predetermined passband frequency range which is smaller than the system bandwidth BW and which ensures that only the interesting signal associated with the first spectral component sp1 is comprised within the filtered signal s2, the interfering second spectral component sp2 being eliminated by the applied filter characteristic. For such filtering process, e.g. the filter device 110 and/or device 110' may be employed.

In the following, further aspects and advantageous embodiments are explained.

A further scenario according to an embodiment is based on the assumption that the above explained D2D transmission from the terminal UE 1 towards the terminal UE2 has been scheduled by the base station 200 on a certain subband sb, e.g. on subband sb as depicted by Fig. 4b. To avoid interference on the same subband, the base station 200 serves in a downlink direction on a different subband another UE, e.g. UE3, cf. the further RF signal rfs'. Due to a much higher power available at the base station 200 (as compared to e.g. a transmission power of the further terminal UE3 for the D2D transmission to the terminal UE2), the power received by the terminal UE2 on two considered subbands might turn out to be the one shown in Fig. 6, where the interfering signal power or second spectral component sp2, respectively, is much higher (may be even decades of dB) than the useful signal power of the first spectral component sp1 of the D2D transmission signal rfs.

Note that according to a further embodiment, a "symmetric" situation could also happen, for instance when the terminal UE3 is closely located to the terminal UE1: in such a case at the terminal UE3 the power of the interfering signal (sent by the terminal UE1, e.g. the D2D transmission) will be much higher than the power of the useful signal (i.e., signal rfs' sent by the base station 200 to the terminal UE3).

By using conventional receiver schemes, in such operational scenarios as explained above with reference to Fig. 5, 6, e.g. an AGC stage of a conventional receiver's ADC simply adapts the thresholds of its quantizer based on an overall power (including both the useful and interfering signal powers sp1, sp2) received on the system band BW (Fig. 6). Therefore, the quantization of the useful signal turns out to be rather poor with the conventional systems.

In contrast, by exploiting the principle according to the embodiments as explained above, the terminal UE2 may select an appropriate predetermined passband frequency range, e.g. by selecting one or more suitable analog filtering units 114a, ..., 114d (out of e.g. K many available in the filter device 110, wherein according to an embodiment K >= 2, preferably K >=10, more preferably K>=20) that include(s) in their filter characteristic the useful signal. In this way, interfering signal power may advantageously be cancelled already in the analog domain, e.g. by the filter device 110 (Fig. 1) which precedes the ADC 104 in the depicted processing chain, thus sensibly improving the quality of the quantization of the useful signal.

A further field of application where the principle according to the embodiments may be very beneficial, too, is dynamic TDD (time division duplexing). With dynamic TDD, each base station may allocate each subframe (of a resource grid) to an uplink (UL) or downlink (DL) transmission depending upon a current level of UL/DL traffic in a radio cell. As a result, a configuration like the one depicted in Fig. 7 often occurs, where a first base station, BS b, is serving a terminal UE4, i.e., a cell "b" of the first base station BS b is in DL mode, whereas the further terminal UE5 transmits toward a second base station, BS c, i.e., a cell "c" of the second base station BS c is in UL mode. If to avoid interference the two UEs UE4, UE5 are scheduled on different subbands within the system bandwidth BW, this may end up in a situation where the powers received by the terminal UE4 are the ones shown in Fig. 6 (similar to the powers received by terminal UE2 in of Figure 5). By employing the principle according to the embodiments, the terminal UE4 may provide for filtering 310 (Fig. 3) with a suitable predetermined passband frequency range, e.g. by selecting the appropriate filtering unit 114b (Fig. 2a) (e.g., out of K many filtering units available in the filter device 110) that includes (i.e., covers with its filter characteristic) the useful signal, and, in turn, reduce the quantization noise at the detection.

According to a further aspect, optimized scheduling at a transmitter side, e.g. in the case of cellular communication systems as depicted by Fig. 5, the base station side, is proposed for reducing complexity of the filter device 110 of the receiver device 100 according to the embodiments. According to an aspect, complexity and cost of the filter device 110 depends on a) the number K of (analog) filtering units 114a, ..., 114d, 112 provided in the filter device 110 and b) the quality of these filtering units, for example related to their roll-off factor.

In scenarios where the base station 200 has full control of both the interferer and the user of interest (e.g. D2D communications as presently standardized by 3GPP), the base station 200 may perform "clever" scheduling of the different transmissions, for instance by allocating sufficient frequency distance between the D2D transmission rfs (Fig. 5) and the DL transmission rfs'. This e.g. allows reducing the requirements on the filtering units of the filter device 110 in terms of bandwidth and roll-off.

Advantageously, the application of the principle according to the embodiments enables to reduce a complexity of digital components of the receiver device 100. Due to the reduced bandwidth of the actually used subband sb (Fig. 4a) with respect to the system band BW, the digital domain parts of the receiver device 100, i.e., the ADC 104 (Fig. 1) and the digital processing unit 106 after the filter device 110, can now operate with a reduced sampling rate.

Moreover, according to further aspects, the advantageous possibility of reducing the sampling rate of the ADC 104, which is enabled by application of the principle according to the embodiments, could be exploited also in other fields of application. For instance, within the framework of massive machine communications (MMC), devices can use the scheme of Fig. 2a and/or Fig. 2b for receiving downlink transmissions located in specific subbands (e.g. DL synchronization signal). In other words, according to an embodiment, it is also possible to provide MMC devices comprising at least one receiver device 100 according to the embodiments.

According to a further aspect, the receiver device 100 according to the embodiments may e.g. form part of at least one of the following: end user equipment, LTE UE (User equipment), M2M device (machine-to-machine), Smartphone, Mobile terminal, WiFi stick, Sensor with radio transceiver, 5G transceiver, 5G radio terminal with device-to-device communication support.

According to a further aspect, the principle according to the embodiments is applicable to the following technological fields and systems: GSM (Global System for Mobile Communications), GPRS (General Packet Radio Service), EDGE (Enhanced Data Rates for GSM Evolution), UMTS (Universal Mobile Telecommunications System), HSPA (High Speed Packet Access), LTE, LTE Advanced, 5G, WiFi (wireless networks based on the IEEE(Institute of Electrical and Electronics Engineers)-802.11-standards family), WLAN (Wireless Local Area Network), IoT (Internet of Things), "Industry 4.0", autonomous driving, D2D (device-to-device) communication, sensor networks, MMC (massive machine communications), MTC (machine-type communications).

Further, the principle according to the embodiments can be seen as a fundamental enabler for many new transmission modes (and also for improving existing transmission modes), e.g. with higher spectrum re-use than classical cellular, e.g. dynamic TDD, D2D, and the like, which are inter alia forecasted as integral parts of 5G and beyond mobile networks. At least some problems arising with these new transmission modes may advantageously be addressed by the principle according to the embodiments.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements wherein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the FIGS., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and-non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Receiver device (100), particularly for a cellular communications network, wherein said receiver device (100) is configured to receive (300) a radio frequency, RF, signal (rfs) from a further device (200) on at least one frequency sub-band (sb) of a system frequency band (sfb) associated with a system bandwidth (BW), wherein said receiver device (100) comprises an analog filter device (110; 110') for filtering (310) said RF signal (rfs) and/or a signal (s1) derived from said RF signal (rfs) to obtain a filtered signal (s2), wherein said filter device (110; 110') is configured to filter (310) said RF signal (rfs) and/or said signal (s1) derived from said RF signal (rfs) with a predetermined passband frequency range (fc1) which is smaller than said system bandwidth (BW).

2. Receiver device (100) according to claim 1, wherein said predetermined passband frequency range (fc1) corresponds with said at least one frequency sub-band (sb) or a plurality of adjacent frequency sub-bands (sb1, sb2).

3. Receiver device (100) according to one of the preceding claims, wherein said filter device (110) comprises at least two filtering units (114a) that comprise filter characteristics with adjacent passband frequency ranges (fc4a, fc4b, .., fc4d; fc3, fc3a).

4. Receiver device (100) according to one of the preceding claims, wherein said filter device (110) comprises a plurality of filtering units (114a, 114b, .., 114d), wherein each filtering unit (114a, 114b, .., 114d) has a filter characteristic with a respective passband frequency range such that any frequency sub-band (sb) of said system bandwidth (BW) is covered by the passband frequency range of at least one of said filtering units (114a, 114b, .., 114d), wherein preferably any frequency sub-band (sb) of said system bandwidth (BW) is covered by the passband frequency range of exactly one of said filtering units (114a, 114b, .., 114d).

5. Receiver device (100) according to one of the preceding claims, wherein a first filtering unit (114a) comprises a bandpass filter characteristic or a low-pass filter characteristic with a first passband frequency range, wherein a second filtering unit (114b) comprises a bandpass filter characteristic with a second passband frequency range, which is adjacent to said first passband frequency range.

6. Receiver device (100) according to one of the preceding claims, wherein said filter device (110) comprises at least one filtering unit (112) that comprises filter characteristics with a passband frequency range that is substantially identical to said system bandwidth (BW).

7. Receiver device (100) according to one of the preceding claims, wherein said receiver (100) is configured to select (300') said predetermined passband frequency range (fc1) depending on frequency resources associated with an expected transmission from said further device (200) to said receiver device (100).

8. Receiver device (100) according to claim 7, wherein said filter device (110) comprises at least two filtering units (114a, 114b, .., 114d) with different bandpass filter characteristics, wherein said step of selecting (300') said predetermined passband frequency range is performed by selecting at least one of said at least two filtering units (114a, 114b, .., 114d) which is associated with said predetermined passband frequency range (fc1) for filtering said RF signal (rfs) and/or said signal (s1) derived from said RF signal (rfs).

9. Receiver device (100) according to one of the preceding claims, wherein said filter device (110') comprises at least one tunable filtering unit (114e), wherein a passband frequency range and/or a passband center frequency of said tunable filtering unit (114e) is tunable.

10. Receiver device (100) according to claim 9, wherein said receiver device (100) is configured to tune said passband frequency range and/or said passband center frequency of said tunable filtering unit (114e) depending on frequency resources associated with an expected transmission from said further device (200) to said receiver device (100).

11. Terminal (UE2) for a cellular communications network comprising at least one receiver device (100) according to at least one of the preceding claims.

12. Base station (BS a) for a cellular communications network comprising at least one receiver device (100) according to at least one of the claims 1 to 10.

13. Method of operating a receiver device (100), particularly for a cellular communications network, wherein said receiver device (100) is configured to receive (300) a radio frequency, RF, signal (rfs) from a further device (200) on at least one frequency sub-band (sb) of a system frequency band (sfb) associated with a system bandwidth (BW), wherein said receiver device (100) comprises an analog filter device (110; 110') for filtering (310) said RF signal (rfs) and/or a signal (s1) derived from said RF signal (rfs) to obtain a filtered signal (s2), wherein said filter device (110; 110') filters said RF signal (rfs) and/or said signal (s1) derived from said RF signal (rfs) with a predetermined passband frequency range (fc1) which is smaller than said system bandwidth (BW).

14. Method according to claim 13, wherein said filter device (110) comprises a plurality of filtering units (114a, 114b, .., 114d), wherein each filtering unit (114a, 114b, .., 114d) has a filter characteristic with a respective passband frequency range such that any frequency sub-band (sb) of said system bandwidth (BW) is covered by the passband frequency range of at least one of said filtering units (114a, 114b, .., 114d), wherein preferably any frequency sub-band (sb) of said system bandwidth (BW) is covered by the passband frequency range of exactly one of said filtering units (114a, 114b, .., 114d), wherein said receiver (100) selects (300') said predetermined passband frequency range (fc1) depending on frequency resources associated with an expected transmission from said further device (200) to said receiver device (100).

15. Method according to one of the claims 13 to 14, wherein said filter device (110') comprises at least one tunable filtering unit (114e), wherein a passband frequency range and/or a passband center frequency of said tunable filtering unit (114e) is tunable, wherein preferably said receiver device (100) tunes said passband frequency range and/or said passband center frequency of said tunable filtering unit (114e), wherein said tuning is particularly performed depending on frequency resources associated with an expected transmission from said further device (200) to said receiver device (100).
